# EUROPÄISCHE PATENTSCHRIFT

(11) **EP 1 532 285 B1**
(45) Veröffentlichungstag und Bekanntmachung des Hinweises auf die Patenterteilung: **31.05.2006**
(21) Anmeldenummer: 03790792.0
(22) Anmeldetag: 08.07.2003
(51) Int. Cl.: C22C 9/02

(54) **WASSERKALIBRATOR**
WATER CALIBRATOR
CALIBRATEUR A EAU

(30) Priorität: 30.08.2002 DE 10240777
(43) Veröffentlichungstag der Anmeldung: 25.05.2005
(73) Patentinhaber: Röhm GmbH & Co. KG, 64293 Darmstadt (DE)
(72) Erfinder: KALTHOF, Bernfried, 63839 Kleinwallstadt (DE)
(86) Internationale Anmeldenummer: PCT/EP2003/007334
(87) Internationale Veröffentlichungsnummer: WO 2004/020680

(56) Entgegenhaltungen:
- EP-A- 0 995 808
- EP-A- 1 029 935
- EP-A- 1 029 939
- WO-A-96/41033
- US-A- 3 817 487
- US-A- 5 413 756
- PATENT ABSTRACTS OF JAPAN vol. 016, no. 560 (C-1008), 2. Dezember 1992 (1992-12-02) -& JP 04 218631 A (NIPPON MINING CO LTD), 10. August 1992 (1992-08-10)
- PATENT ABSTRACTS OF JAPAN vol. 1996, no. 09, 30. September 1996 (1996-09-30) -& JP 08 120369 A (TABUCHI:KK;CHUETSU GOKIN CHUKO KK), 14. Mai 1996 (1996-05-14)

## Beschreibung

Die Erfindung betrifft eine Vorrichtung zum Kalibrieren von Kunststoffformkörpern, insbesondere von Kunststoffrohren, eine Vorrichtung zur Durchführung des Verfahrens und die mit dem erfindungsgemäßen Verfahren herstellbaren Kunststoffformkörper, beispielsweise Rohre.

### Stand der Technik

Kalibrierungssysteme für glatte Rohre aus Kunststoffen sind bekannt. So werden beispielsweise im "Handbuch der Extrusionstechnik", Bd.2, Carl Hanser Verlag, (1998) Kalibrierungssysteme für glatte Rohre beschrieben.

Der Vakuum-Tauchkalibrator (Bild 13, S. 45) zeigt, wie Rohre durch mehrere Kalibratoren geführt werden. Der Tank kann auch geflutet werden. Beschrieben werden ferner Kalibrierwerkzeuge aus Materialien mit guten Wärmeleiteigenschaften, beispielsweise aus Rotguss, Messing oder Aluminium.

Überdruckkalibrierungen werden bevorzugt für größere Rohrdurchmesser verwendet. Am Rohrwerkzeug hängt in einem bestimmten Abstand ein Dichtstopfen, im Raum zwischen Dichtstopfen und Werkzeug wird ein Überdruck erzeugt, der ein Anliegen des Rohres an die Innenwand der gekühlten Kalibrierhülse bewirkt.

Über die Oberflächenqualitäten der so hergestellten Rohre werden keine Angaben gemacht.

DE 32 16 720 (Dynamit Nobel AG) beschreibt ein Verfahren zum Extrudieren und Kalibrieren von Kunststoffrohren, bei dem nach dem Extrudieren in einer Behandlungsstrecke die äußere Schicht der Rohrwandung wieder erwärmt wird und danach das Rohr wieder abgekühlt wird.
Durch diesen Erwärmungsschritt wird eine ungleichmäßige Abkühlung der Rohre mit den daraus sich ergebenden mechanischen Nachteilen im fertigen Rohr vermieden. Dieses Verfahren eignet sich für teilkristalline Polymere wie Polyethylen (PE), Polypropylen (PP), Polyamid (PA), Polyvinylchlorid (PVC) oder Polyvinylidenfluorid.

DE 17 04 972 beschreibt eine Kalibriervorrichtung für Kunststoffrohre, die es erlaubt, sowohl die Innenseite als auch die Außenseite des Rohres zu kühlen und damit die notwendige Kühlstrecke zu verringern.

DE 25 06 517 (Barmag AG) beschreibt ein Verfahren zur Innenkühlung von stranggepressten Hohlprofilen, beispielsweise Rohren, wobei das Hohlprofil an der Außenfläche gekühlt wird und an der Innenseite Wasser mit einem einstellbaren Überdruck eingeleitet wird. Der Innenabschnitt wird durch ein Drosselelement in Abschnitte mit unterschiedlichen Drucken aufgeteilt.

DE 25 44 611 schlägt eine Kombination das Sprüh- und Tauchkühlung mit den dazugehörenden Maß- und Regeleinrichtungen vor.

Ein unter Unterdruck stehendes Kühlbad beschreibt DE 31 39 684.

### Aufgabe

Es bestand die Aufgabe, ein Verfahren zur Verfügung zu stellen, dass nicht nur spannungsfreie Rohre zur Verfügung stellt, sondern darüberhinaus auch noch Rohre aus transparenten Kunststoffen mit einer hohen Oberflächenqualität. Unter einer hohen Oberflächenqualität des extrudierten Rohres wird verstanden, dass das Rohr eine möglichst streifen- und kratzfreie Oberfläche aufweist. Im Durchlicht sollen ferner möglichst wenig Schlieren erkennbar sein.

Dieser Gesichtspunkt wurde im Stand der Technik bisher nicht betrachtet, da transparente Kunststoffe nicht gesondert diskutiert wurden und man sich mit den erzielten Qualitäten zufrieden gab.
Es bestand ferner die Aufgabe, eine Kalibrierdüse zu finden, die es erlaubt, Rohre aus transparenten Kunststoffen mit der angestrebten hohen Oberflächenqualität herzustellen.
Neben dem geeigneten Material für die Kalibrierdüse war auch die optimale Geometrie der Kalibrierdüse zu finden und die entsprechende Abkühlstrecke zu konstruieren.

### Lösung

Gelöst wird die Aufgabe durch eine Kalibrierdüse nach Anspruch 1.

Sie besteht aus einem Vakuumtankkalibrator (Sprüh- oder Vollbad) mit folgenden Merkmalen:

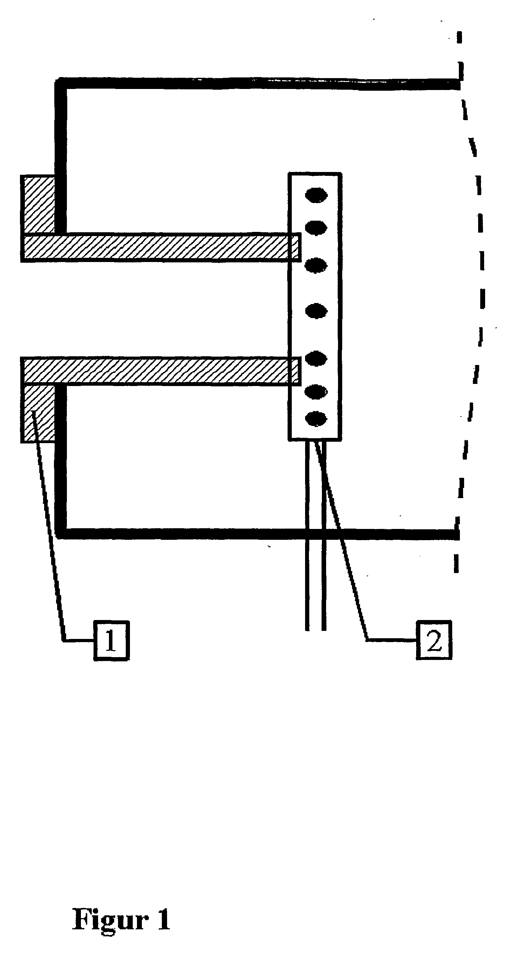

Unmittelbar nach der Schmelzedüse (in Figur 1 nicht dargestellt) befindet sich eine Kalibrierdüse aus einer Messinglegierung. (Figur 1, Nr.1)

Die Kalibrierdüse wird aus Messing gefertigt und weist einen Mittelrauhwert Ra von 0,14 µm, eine Rz (gemittelte Rauhtiefe) von 1,2 µm auf. Die Werte wurden mit dem Gerät Tallysurf (Hersteller: Rank Taylor Hobson) nach DIN 4768 bestimmt. Der cut-off betrug 0,8 mm.
Die verwendete Messinglegierung hat folgende Zusammensetzung:
Cu: von 89 bis 95 Gew.-%
Zn: von 0,3 bis 0,7 Gew.-%
Pb: von 0,4 bis 2 Gew.-%
Sn: 10-13 Gew.-%
Ni: 0,3-0,7 Gew.-%

Die Länge der Kalibrierhülse wird in Abhängigkeit des Durchmessers des zu extrudierenden Rohres gewählt.

Die Länge der Kalibrierdüse (1) ist von Bedeutung für die Qualität der erhaltenen Rohre.

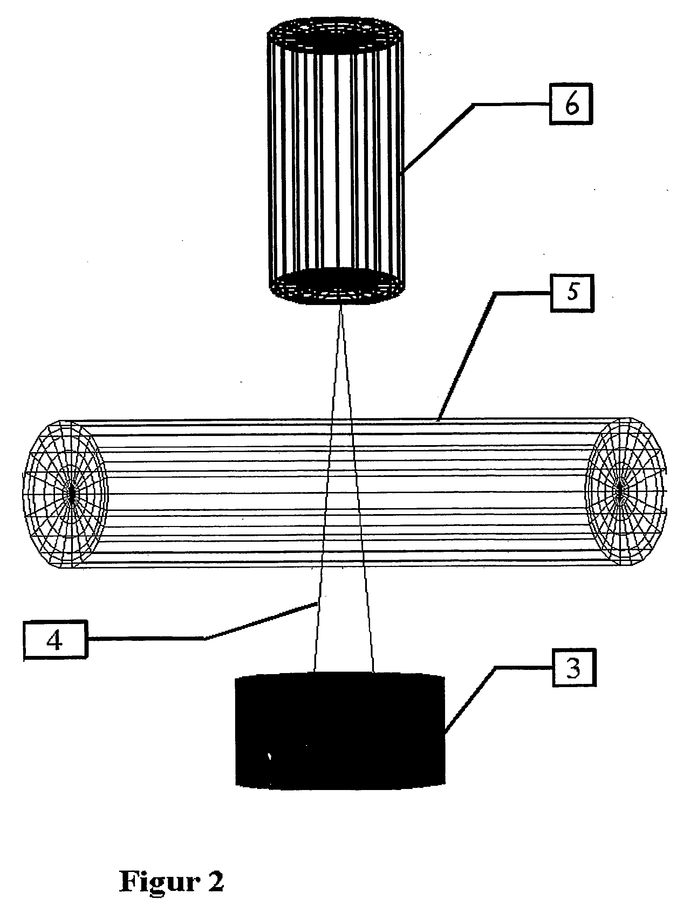

Als vorteilhaft haben sich folgende Beziehungen für die Länge der Kalibrierdüse in Abhängigkeit zum Rohr ∅ (5) , Figur 2, erwiesen:

| Rohrdurchmesser in mm | L/D |
|---|---|
| ∅10:40= | 2,0 : 4,0 |
| ∅50:70= | 1,4 : 2,0 |
| ∅80:100= | 1,2:1,5 |
| ∅110:250= | 1,0:1,3 |

L= Länge in mm
D= Außendurchmesser des Rohres

Zur Unterstützung der Kalibrierung in der Kalibrierungsdüse (1) kann Stützluft zugeführt werden. Der Druck der zugeführten Stützluft richtet sich nach den technischen Erfordernissen und kann an der Anlage leicht geregelt werden.

An der Einlauföffnung der Kalibrierdüse (1) befindliche Kanten, die mit dem Extrudat in Kontakt kommen, weisen zweckmäßigerweise einen Krümmungsradius auf.
Der Krümmungsradius beträgt zwischen 1 mm und 3 mm.

Unmittelbar nach dem Ende der Kalibrierdüse (1) wird eine Wasserringdüse (2) angeordnet. Aus der Wasserringdüse (2) strömt Wasser aus und trift auf die Rohroberfläche auf.

Wichtig ist, dass in der Wasserringdüse (2) überall der gleiche Wasserdruck bei Wasseraustritt herrscht. Daher ist sie als geschlossene Ringdüse ausgebildet. Ungleichmäßigkeiten in der Anströmung der frisch extrudierten Rohroberfläche, verursacht durch Schwankungen des Wasserdrucks, führen zu Oberflächendefekten des extrudierten Rohres.

Der Durchmesser der Wasserringdüse (2) ist nur wenig größer als der Durchmesser des extrudierten Rohres.

An der Innenseite der Wasserringdüse (2) sind Bohrungen gleichmäßig angeordnet, aus denen das Wasser mit Überdruck austritt.

Der Durchmesser der Bohrungen beträgt zwischen 2,0 mm und 10 mm.

Die Funktion der Wasserringdüse (2) besteht unter anderem darin, an der Rohroberfläche anhaftende Luftbläschen zu entfernen, da diese Luftbläschen an der Oberfläche des abgekühlten Rohres Unsauberkeiten hinterlassen, die die optische Qualität der Rohre beeinträchtigen.

An die Tankkalibrator-Strecke schließt sich eine Sprühkammer an, in die die Rohre auf Umgebungstemperatur abgekühlt werden.

Die erfindungsgemäße Vorrichtung eignet sich zur Extrusion von transparenten Kunststoffen, wie beispielsweise Polycarbonat (PC), Polymethacrylat (PMMA) oder Polyethylenterephthalat (PET), zu Rohren.

Die Rohre weisen eine deutliche verbesserte Oberflächenqualität auf.
Die verbesserte Oberflächenqualität der extrudierten Rohre aus Plexiglas® wird mittels Brechkraftmessung bestimmt.

Um die Oberflächenbeschaffenheit des Rohres charakterisieren zu können, wird bei dem Messverfahren die Ablenkung eines Laserstrahls beim Durchlaufen des Rohres ermittelt und der Ablenkungswinkel des Laserstrahls in Winkelminuten über die Rohrbreite bestimmt.

Die Anlage besteht aus den Komponenten (siehe Figur 2)
6 Laserlichtquelle
5 Untersuchungsobjekt, beispielsweise Rohr
3 Detektor
4 Laserstrahlbündel

Die Messung erfolgt in Abschnitten der Rohre von jeweils 200 mm Länge.

Messergebnisse (Ablenkungswinkel in Winkelminuten)

| Rohrlänge | Beispiel 1 | Vergleich 1 | Vergleich 2 |
|---|---|---|---|
| 0-200 mm | 0,93 | 3,903 | 5,7 |
| 200-400 mm | 0,791 | 2,518 | 1,6 |
| 400-600 mm | 1,042 | 2,683 | 1,4 |
| 600-800 mm | 1,009 | ― | ― |

Beispiel 1 stellt ein erfindungsgemäß hergestelltes Rohr dar, Vergleichsbeispiel 1 und Vergleichsbeispiel 2 stellen Messungen an handelsüblichen Rohren dar.

### Beschreibung der Messmethode

Bei der Extrusion von Folien für Anwendungen werden möglichst streifen- und kratzfreie Oberflächen gefordert. Um die Oberflächenbeschaffenheit charakterisieren zu können, wird bei diesem Messverfahren die Ablenkung eines Laserstrahls beim Durchleuchten einer Folienbahn ermittelt und der Ablenkungswinkel als Graph, oder Einzelwert, in Minuten über der Folienbreite ausgegeben.

Die Werte zeigen, dass die nach dem erfindungsgemäßen Verfahren hergestellten Rohre eine deutlich bessere Oberflächenqualität aufweisen als die handelsüblichen Rohre.

### Bezugszeichen

Figur 1
   1 Kalibrierdüse
   2 Wasserringdüse
Figur 2
   6 Laserlichtquelle
   5 Untersuchungsobjekt
   3 Detektor, z.B. Zeilenkamera
   4 Laserstrahlbündel

## Patentansprüche

1. Kalibrierdüse (1) zum Extrudieren und Glätten von Rohren aus transparenten Kunststoffen,
**dadurch gekennzeichnet, dass**
sie aus einer Messinglegierung folgender Zusammensetzung besteht:
Cu: von 89 bis 95 Gew.-%
Zn: von 0,3 bis 0,7 Gew.-%
Pb: von 0,4 bis 2 Gew.-%
Sn: 10-13 Gew.-%
Ni: 0,3 - 0,7 Gew.-%
ein Verhältnis von Außendurchmesser des Rohres D zu Länge der Kalibierdüse von 2 : 4 bis 1: 1,3 aufweist und der Krümmungsradius der inneren Kanten der Kalibrierdüse zwischen 1 mm und 3 mm beträgt.

2. Vorrichtung zum Extrudieren von Rohren mit hoher Oberflächenqualität aus Kunststoff, bestehend aus einer Kalibrierdüse (1) nach Anspruch 1 und einer im Abstand angeordneten Wasserringdüse (2) mit an der Düseninnenseite angeordneten Bohrungen.

3. Verfahren zur Extrusion von Rohren aus transparenten Kunststoffen,
**dadurch gekennzeichnet,**
**dass** als Kalibrierdüse (1) eine Düse gemäß Anspruch 1 eingesetzt wird.

4. Rohre aus transparenten Kunststoffen, erhältlich nach einem Verfahren nach Anspruch 3.

5. Rohre aus PMMA, erhältlich nach einem Verfahren nach Anspruch 3.

6. Verwendung der Rohre nach Anspruch 4 oder 5 zur Herstellung von Möbeln.

## Claims

1. Calibrating die (1) for extruding and smoothing tubes made of transparent plastics, **characterised in that** it consists of a brass alloy having the following composition:
Cu: from 89 to 95 wt.%
Zn: from 0.3 to 0.7 wt.%
Pb: from 0.4 to 2 wt.%
Sn: 10 - 13 wt.%
Ni: 0.3 - 0.7 wt.%,
has a ratio of the external diameter of the tube D to the length of the calibrating die of 2 : 4 to 1 : 1.3 and the radius of curvature of the inner edges of the calibrating die is between 1 mm and 3 mm.

2. Apparatus for extruding tubes with a high-grade surface from plastics, consisting of a calibrating die (1) according to claim 1 and a water-ring die (2) spaced therefrom having bores disposed on the inside of the die.

3. Method of extruding tubes from transparent plastics, **characterised in that** a die according to claim 1 is used as the calibrating die (1).

4. Tubes made of transparent plastics, obtainable by a method according to claim 3.

5. Tubes made of PMMA, obtainable by a method according to claim 3.

6. Use of the tubes according to claim 4 or 5 for the manufacture of furniture.

## Revendications

1. Filière de calibrage (1) pour l'extrusion et le lissage de tubes en matières plastiques transparentes,
**caractérisée en ce qu'**
elle est constituée d'un alliage de laiton ayant la composition suivante :
Cu : de 89 à 95 % en poids
Zn : de 0,3 à 0,7 % en poids
Pb : de 0,4 à 2 % en poids
Sn : de 10 à 13 % en poids
Ni : de 0,3 à 0,7 % en poids
elle présente un rapport entre le diamètre extérieur du tube D et la longueur de la filière de calibrage de 2/4 à 1/1,3 et le rayon de courbure des arêtes intérieures de la filière de calibrage est compris entre 1 et 3 mm.

2. Dispositif d'extrusion de tubes en matière plastique d'une grande qualité de surface, constitué d'une filière de calibrage (1) selon la revendication 1, et d'une filière annulaire à eau (2), écartée et comportant des perforations à l'intérieur de la filière.

3. Procédé d'extrusion de tubes en matières plastiques transparentes,
**caractérisé en ce qu'**
on utilise une filière selon la revendication 1 en tant que filière de calibrage (1).

4. Tubes en matières plastiques transparentes, pouvant être obtenus par un procédé selon la revendication 3.

5. Tubes en PMMA, pouvant être obtenus avec un procédé selon la revendication 3.

6. Utilisation des tubes selon la revendication 4 ou 5, pour fabriquer des meubles.
